# EUROPEAN PATENT APPLICATION

(11) **EP 2 497 968 A1**
(43) Date of publication of application: **12.09.2012**
(21) Application number: 10828324.3
(22) Date of filing: 04.11.2010
(51) Int. Cl.: F16D 65/22, F16D 51/22, F16D 65/00

(54) **DRUM BRAKE TYPE PARKING BRAKE DEVICE**

(30) Priority: 04.11.2009 JP 2009252657
(71) Applicant: Akebono Brake Industry Co., Ltd., Tokyo 103-8534 (JP)
(72) Inventor: TSUZUKU, Haruo, Tokyo (JP); ISHIKAWA, Hiroyasu, Tokyo (JP); IKEGAMI; Hiroshi, Tokyo (JP); KAKIZAKI, Hideki, Tokyo (JP); MAEHARA, Toshifumi, Tokyo (JP)
(74) Representative: Grünecker, Kinkeldey, Stockmair & Schwanhäusser
(86) International application number: PCT/JP2010/069636
(87) International publication number: WO 2011/055764

(57) **Abstract**

By adopting a link type of force increasing device having a low transmission loss, it is possible to promote a reduction in size and weight using an electric motor having a relatively small output, and the reaction due to the braking is offset within the force increasing device, thereby realizing a structure in which a large force is not applied to a joining portion of the force increasing device and the back plate 1.

A joining link (25), a strut (11c), and first and second expansion levers (26, 27) constitute an expansion and contraction device (23). At the time of the braking, the proximal end portion of both of the expansion levers (26, 27) are mutually pressed from the opposite sides by first and second pressing members (34, 33) constituting a driving device (24). The reaction due to the braking is offset by the joining link portion (25), whereby a large force is not applied to the back plate (1) or the like.

## Description

### Technical Field

The present invention is related to an improvement in drum brake type parking brake apparatus for maintaining a vehicle (automobile) in a stop state.

### Background Art

In order to perform the braking of a vehicle, a drum brake is widely used. In the drum brake, for example, as described in NPL 1, various types of drum brakes are known. Among them, a leading and trailing type of drum brake is widely used, since it obtains stable braking force upon forward movement and upon reverse movement. Figs. 15 to 17 show an example of a leading and trailing type of drum gear disclosed in PTL 1. The drum brake includes a back plate 1, an anchor 2, a wheel cylinder 3, a pair of brake shoes 4a and 4b, and a drum 5.

Among them, the back plate 1 is supported and fixed to constituent members of a suspension device such as a knuckle and an axle housing. Furthermore, the anchor 2 is supported and fixed to a portion near the outside of one circumferential direction of one place of the back plate 1 in a diameter direction. Moreover, the wheel cylinder 3 is fixed in a position of a side opposite to the anchor 2 with respect to the diameter direction of the back plate 1 in the portion near an outer diameter of the back plate 1. The wheel cylinder 3 is a part in which a pair of pistons is fitted into both end portions of a cylinder housing 6 in an oil-tight manner, and, by introducing a hydraulic cylinder into a central portion of the cylinder housing 6, protrusion amounts of both pistons from both end portions of the cylinder housing 6 are increased (a gap between both pistons is expanded). Furthermore, both of the brake shoes 4a and 4b support the back plate 1 so as to be displaceable in the diameter direction in a portion between the anchor 2 and the wheel cylinder 3 in two positions of opposite sides of the back plate 1 in the diameter direction.

Both of the brake shoes 4a and 4b include approximately arc-shaped webs 7a and 7b; back plates 8a and 8b which are fixed to outer peripheral edge portions of the webs 7a and 7b at each central portion thereof in a width direction by welding and the like; and linings 9a and 9b which are impregnated and fixed to outer peripheral surfaces of the back plates 8a and 8b. Moreover, one end edges in a circumferential direction of the respective webs 7a and 7b abut against the anchor 2, and the other end edges thereof in the circumferential direction abut against bottom surfaces of engagement grooves formed in distal end portions of both pistons. In addition, the drum 5 is formed in a dish shape by cast iron and the like, provided in the state of covering both brake shoes 4a and 4b, and rotates with vehicle wheels.

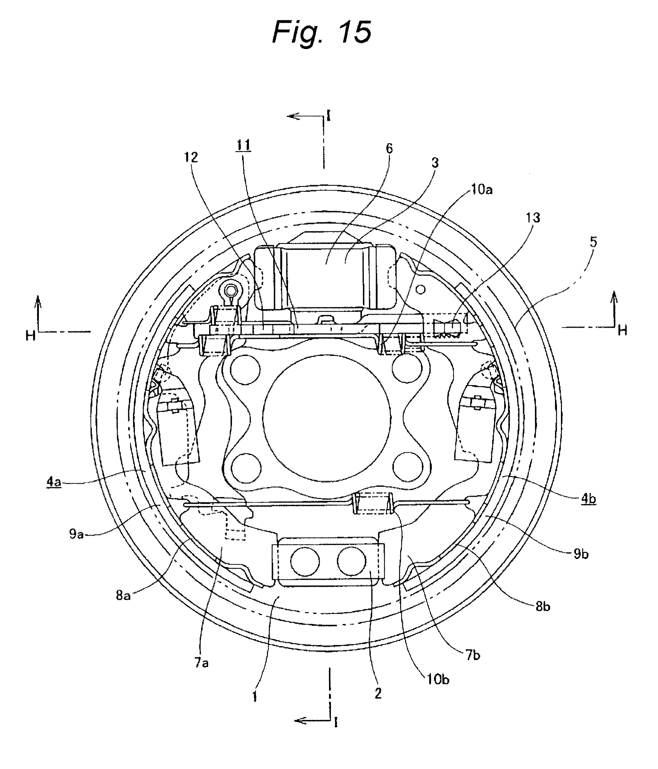

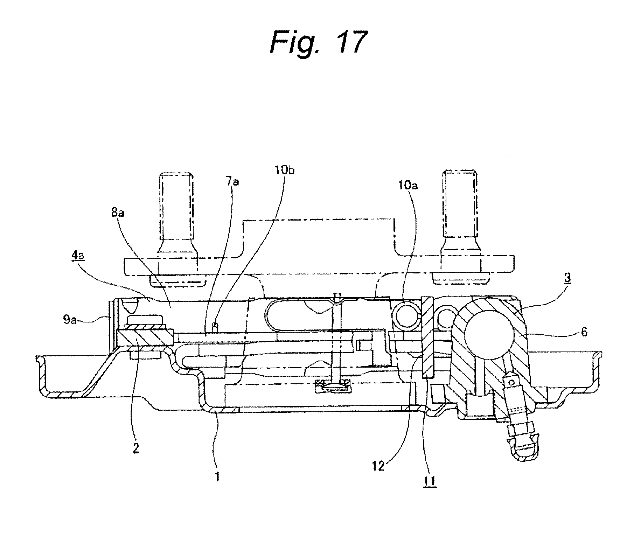

When the braking is performed by the drum brake configured as mentioned above, the hydraulic pressure is introduced into the wheel cylinder 3 by stepping on a brake pedal, thereby increasing the protrusion amount of both pistons from the cylinder housing 6. Then, the gap between both webs 7a and 7b, in which the respective other end edges in the circumferential direction abut against the distal end portions of both pistons, is expanded, and both of the brake shoes 4a and 4b are oscillated and displaced around the anchor 2 in the outer direction of the diameter direction. As a consequence, the outer peripheral surfaces of the linings 9a and 9b of both brake shoes 4a and 4b are pushed to an inner peripheral surface of the drum 5, whereby the braking is performed. When the hydraulic pressure in the wheel cylinder 3 is released along with the braking release, both of the brake shoes 4a and 4b are displaced to the inside of the diameter direction while pushing both pistons into the cylinder housing 6 by elasticity of return springs 10a and 10b. Furthermore, it is known from the related art that, as described in the NPL and the like, when performing the braking by the drum brake, a surface pressure of a contact portion (a frictional engagement portion) between the respective peripheral surfaces becomes non-uniform in regard to the circumferential direction of the linings 9a and 9b. For example, as shown in aforementioned Figs. 15 to 17, even in the case of a structure in which the end edges of the webs 7a and 7b abut against the anchor 2 in the leading and trailing type of drum brake so as to be oscillatable and displaceable in the diameter direction, even in regard to any of the brake shoes 4a and 4b, the contact surface pressure between the outer peripheral surfaces of both linings 9a and 9b and inner peripheral surface of the drum 5 becomes non-uniform in the circumferential direction.

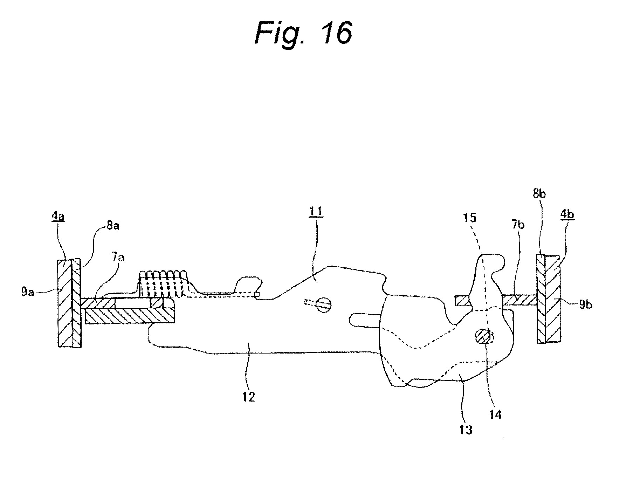

Moreover, in the case of a first example of the related art structure shown in Figs. 15 to 17, an automatic gap adjustment strut 11 is provided, thereby maintaining a gap (space) between the outer peripheral surfaces of both linings 9a and 9b and the inner surface of the drums to an optimal value in the non-braking state regardless of the abrasion of the linings 9a and 9b. The strut 11 is formed by connecting a main plate portion 12 with a sub plate portion 13 by a pivot 14. Furthermore, the pivot 14 is fixed to the sub plate portion 13 and is engaged with a long hole 15 formed in the main plate portion 12 so as to be displaceable in a longitudinal direction of the long hole 15. When a gap between both webs 7a and 7b is expanded along with the braking, the sub plate portion 13 is oscillated in a clockwise direction of Fig. 16 around the pivot 14.

A distance from the center of the pivot 14 to a portion of the end edge of the sub plate portion 13 where abutted against the end edge of the main plate portion 12 is lengthened in accordance with rearward with respect to the oscillation direction (downward in Fig. 16). For this reason, along with the oscillation displacement of the sub plate portion 13 around the pivot 14, the end edge of the sub plate portion 13 is engaged with (abutted against) the end edge of the main plate portion 12. Moreover, even when the gap between both webs 7a and 7b contracts based on the elasticity of both of the return springs 10a and 10b along with the braking release, the contraction amount contracts by an amount equivalent to the oscillation displacement of the sub plate portion 13 as compared to the expansion amount for braking. For this reason, the size of the gap between the inner peripheral surfaces of both linings 9a and 9b and the inner peripheral surface of the drum 5 is maintained to an optimal value regardless of the abrasion of both linings 9a and 9b.

Although an operation at the time of using a so-called service brake in which a vehicle is decelerated and stopped during running, and an operation of an automatic gap adjustment device are as mentioned above, it is also often the case that a parking brake apparatus, which keeps the vehicle in a stop state without stepping on the brake pedal, is built into the drum brake as mentioned above. Furthermore, as known from the related art, it is also described in PTLs 2 and 3 that the service brake is implemented as a hydraulic type and the parking brake is mechanically performed by a link mechanism which uses an electric motor as a driving source, and that it is carried out in a part of a vehicle. In addition, as known from the related art, PTLs 4 to 6 and the like disclose an electric brake apparatus in which the hydraulic mechanism is omitted, and a function of both of service brake and parking brake is exhibited only by a mechanical type of force increasing mechanism that uses an electric motor as a driving source.

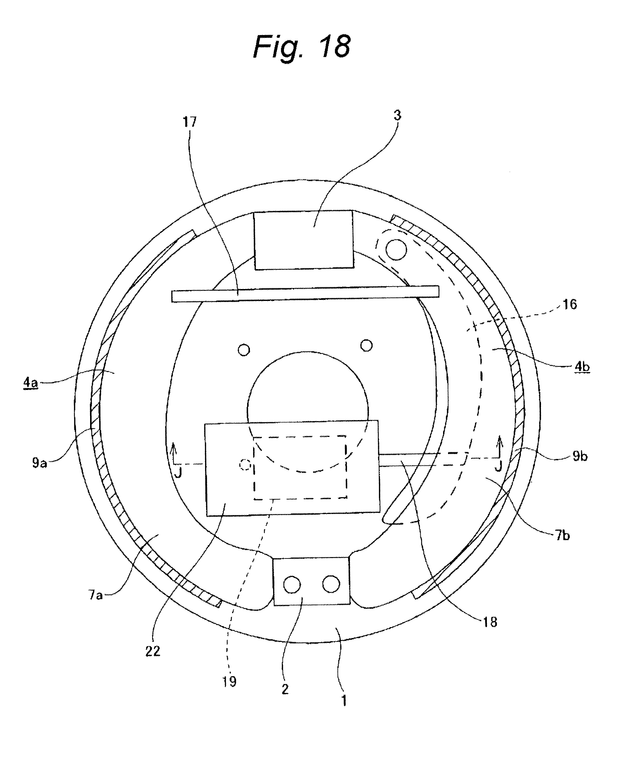

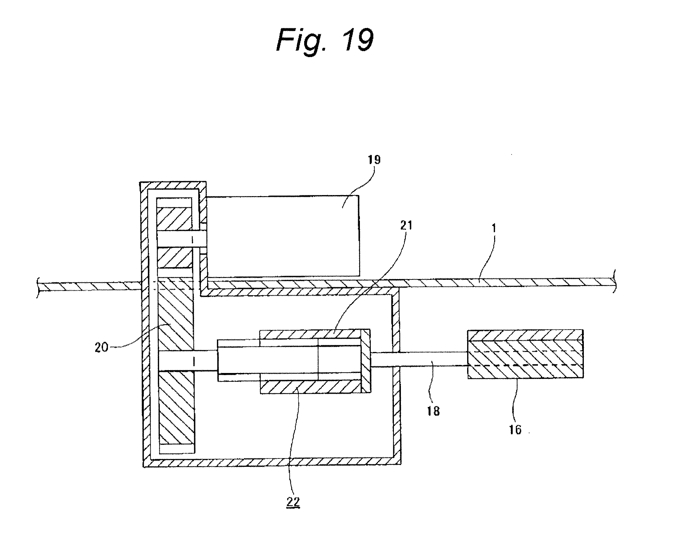

Among these, Figs. 18 and 19 show a first example of the drum brake 1 described in PTL 3 in which the service brake is implemented as a hydraulic type and the parking brake is implemented as a mechanical type that uses an electric motor as a driving source, respectively. Since the basic structure of the drum brake is similar to the general structure described in the aforementioned Fig. 15, the identical portions will be denoted by the same reference numerals and the overlapped description will be omitted or simplified. Hereinafter, a configuration and operation of a mechanical parking brake apparatus portion will be preponderantly described.

A proximal end portion of a parking lever 16 is pivotally supported on an end portion near the wheel cylinder 3 in the web 7b constituting one brake shoe 4b, and a pressing rod 17 is expanded between a portion near a middle portion proximal end of the parking lever 16 and a portion near the wheel cylinder 3 of the web 7a constituting the other brake shoe 4a. Moreover, a distal end of a tension rod 18 is combined with the distal end of the parking lever 16. In addition, the distal end portion of the tension rod 18 can be pulled by an electric actuator 22 that includes an electric motor 19, a decelerator 20, and a transport screw device 21.

When the parking brake apparatus is operated, the parking lever 16 is rotated in a clockwise direction of Fig. 18 via the tension rod 18 by the actuator 22. Moreover, the other brake shoe 4a is pressed in the outer direction of the diameter direction via the pressing rod 17, and as a consequence of as a reaction thereto, the one brake shoe 4b is displaced in the outer direction of the diameter direction. As a consequence, the outer peripheral surfaces of the linings 9a and 9b of both brake shoes 4a and 4b are pushed to the inner peripheral surface of the drum, whereby the braking is performed.

In the case of the structure of the related art shown in Figs. 18 and 19, the reaction of the braking force generated by pushing the outer peripheral surfaces of both linings 9a and 9b to the inner peripheral surface of the drum is applied to the actuator 22 via the parking lever 16 and the tension rod 18. For this reason, there is a need to sufficiently raise the rigidity of a portion which supports and fixes the actuator 22 to the back plate 1, which is disadvantageous in terms of promoting a reduction in the size and weight of the drum brake type of parking brake apparatus. This is also true for the case of the structures described in PTLs 4 and 6.

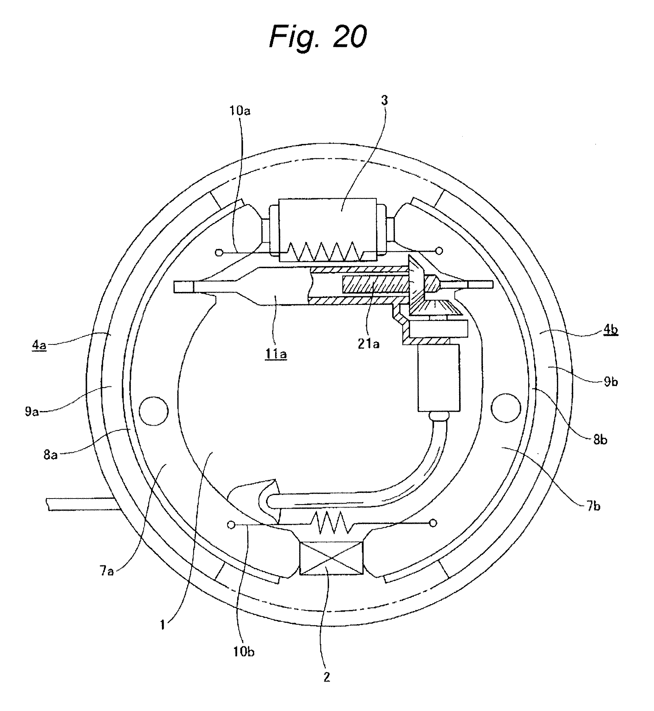

PTL 2 discloses a structure in which, as shown in Fig. 20, a strut 11 a stretched and contracted by the transport screw device 21 a is provided between a pair of brake shoes 4a and 4b. According to the structure of the related art, the problem of a reduction in size and weight as mentioned above is offset; however, unlike the structure shown in Figs. 18 and 19, it is difficult to dispose the actuator (the transport screw device 21 a) to a rear surface side of the back plate 1. For this reason, it is disadvantageous from the viewpoint of securing a deceleration ratio of the decelerator by effectively using the space of the rear surface side of the back plate 1, increasing the output of the actuator, and realizing a structure that promotes to secure the braking force.

Moreover, PTL 5 discloses a structure in which the transport screw device is combined with a worm type deceleration mechanism and an electric motor is disposed on a rear surface side of the back plate. According to such a structure, it is possible to use a space of the rear surface side of the back plate. However, in the structure described in the PTL 5, the force increasing mechanism is constituted by only a gear type decelerator and the transport screw mechanism, both of which suffer great frictional loss, whereby, in order to secure the great braking force, there is a need to use a large electric motor as a driving source.

### Citation List

[PTL 1] JP-A-2009-168228
[PTL 2] JP-A-8-244596
[PTL 3] JP-A-11-105680
[PTL 4] J P-A-2003-28215
[PTL 5] JP-A-2006-336868
[PTL 6] Specification of US Patent No. 5310026
[PTL 7] JP-A-2003-314594

[NPL 1] "Automobile Hydraulic Pressure Brake System" compiled by Incorporated Association Japan Auto Parts Industries Association/Brake Cylinder technical committee, revised edition, Incorporated Association Japan Auto Parts Industries Association, March 1, 1991, pages 188 and 191 to 194

### Summary of Invention

### Technical Problem

The present invention was made in view of the above circumstances to realize a structure that can promote a reduction in size and weight using an electric motor having a relatively small output by adopting a link type of force increasing device with a low transmission loss and in which a large force is not applied to a joining portion of the force increasing device and the back plate by canceling out a reaction due to the braking within the force increasing device.

### Solution to Problem

Similarly to the drum brake type parking brake apparatus known from the aforementioned related art, a drum brake type parking brake apparatus of the present invention includes a back plate, a pair of brake shoes, a drum, an expansion and contraction device, and a driving device for driving the expansion and contraction device.
Among these, the back plate is supported and fixed to constituent members of a suspension device such as a knuckle and an axle housing.
Furthermore, both of the brake shoes are fixed in two positions of opposite sides in a diameter direction of the back plate so as to be displaceable in the diameter direction of the back plate.
Moreover, the drum is provided in the state of covering both of the brake shoes and is rotated with the vehicle wheels.
Furthermore, the expansion and contraction device is provided between inner peripheral edges of webs constituting both of the brake shoes so as to expand and contract a gap between both of the brake shoes.
In addition, the driving device is to drive the expansion and contraction device.

In particular, in the drum brake type parking brake apparatus of the present invention, the expansion and contraction device includes a joining link, a strut, and first and second expansion levers.
Among these, the joining link is disposed in a direction of expanding and contracting both of the brake shoes.
Furthermore, the first expansion lever is pivotally supported to an end portion near one brake shoe among the joining link at a portion near a middle portion distal end thereof, and the distal end portion is engaged with the web of one brake shoe so that it can press the web in the outer direction of the diameter direction (directly or via another member).
Moreover, the second expansion lever is pivotally supported to an end portion of a side opposite to the one brake shoe in the joining link at a portion near a middle portion distal end thereof, and the distal end portion is pivotally supported to the proximal end portion of the strut.
Furthermore, the distal end portion of the strut is engaged with the web of the other brake shoe of both of the brake shoes so that it can press the web in the outer direction of the diameter direction (directly or via another member).

Meanwhile, the driving device includes a pair of pressing members and a driving source.
Both of the pressing members are distantly moved in a disposition direction of the joining link in the state of interposing the proximal end portions of the first and second expansion levers from opposite sides therebetween.
Furthermore, the driving source expands and contracts the gap between both of the pressing members. Such a driving source includes, for example, an electric motor, an optimal decelerator such as a gear decelerator, and a mechanism that converts the rotation movement of the transport screw mechanism or the like into a straight line movement.
In addition, in the case of the present invention, a distance from a center of a pivot portion between the end portion of the joining link and a portion near the middle portion distal end of the first expansion lever to an engagement portion of the distal end portion of the first expansion lever with the inner peripheral edge of the web of the one brake shoe is smaller than a distance to an engagement portion of the first expansion lever and the pressing member. Similarly, a distance from a center of a pivot portion between the end portion of the joining link and a portion near the middle portion distal end of the second expansion lever to a center of the pivot portion between the distal end portion of the second expansion lever and the proximal end portion of the strut is smaller than a distance to an engagement portion of the second expansion lever and the pressing member.

When carrying out the drum brake type parking brake apparatus of the aforementioned first invention, in a second invention, the two pressing members are a first pressing member that has one screw portion of either a male screw portion or a female screw portion at one end portion, and a second pressing member that has the other screw portion of either the male screw portion or the female screw portion to be screwed to the one screw portion.
Moreover, in the state in which the one screw portion is screwed to the other screw portion, the proximal end portions of the first and second expansion levers are mutually clamped from opposite sides by the distal end surface of the second pressing member and the other end portion of the first pressing member.

In the case of carrying out the second invention, more specifically, in a third invention, the proximal end portions of the first and second expansion levers are made to protrude from the rear surface, which is a surface of a side opposite to the side equipped with both of the brake shoes of both side surfaces of the back plate, through a through hole formed in the back plate.
Furthermore, in a portion that covers the through hole on the rear surface of the back plate, a driving source is installed which relatively rotates the first pressing member and the second pressing member.
Moreover, among the first and second pressing members, the first pressing member is supported in the state of allowing the displacement of the disposition direction of the joining link and the strut but not being rotated. In contrast thereto, the second pressing member is supported so as to be displaceable and rotatable in this direction, whereby it is possible to rotate and drive the second pressing member in both directions by the electric motor.

Otherwise, when carrying out the drum brake type parking brake apparatus of the aforementioned first invention, in a fourth invention, the two pressing members are a cover fixed to the back plate and a screw lever that is supported so as to be movable only in an axial direction within the cover.
Moreover, the screw lever is screwed into a screw hole which is provided in a center portion of a deceleration rotation member that is only rotatably supported in the cover and is rotated by the electric motor.
In addition, the proximal end portions of the first and second expansion levers are mutually clamped from opposite sides by a part of the cover and the distal end portion of the screw lever.

In addition, when carrying out the present invention, preferably, in a fifth embodiment, the lever ratios of the first and second expansion levers are substantially identical to each other.
Moreover, among these, the lever ratio relating to the first expansion lever is a ratio of the distance from the center of the pivot portion between the end portion of the joining link and the portion near the middle portion distal end of the first expansion lever to the engagement portion of the distal end portion of the first expansion lever and the inner peripheral edge of the web of the one brake shoe, to the distance to the engagement portion of the first expansion lever and the pressing member.
Additionally, the lever ratio relating to the second expansion lever is a ratio of the distance from the center of the pivot portion of the end portion of the joining link and the portion near the middle portion distal end of the second expansion lever to the center of the pivot portion between the distal end portion of the second expansion lever and the proximal end portion of the strut, to the distance to the engagement portion of the second expansion lever and the pressing member.

Moreover, the lever ratios relating to both levers and defining each of them in this manner cannot always be strictly identical to each other regardless of the displacements of both levers, but the difference can sufficiently be suppressed to be small. Thus, in the fifth embodiment, the fact that both lever ratios are substantially identical to each other means that, in the case of comparing one lever ratio with the other lever ratio, the difference is within ±10%, preferably, ±5%, more preferably, ±2%.

Moreover, when carrying out the present invention, preferably, in a sixth invention, a gear type of deceleration device is included between a pressing member (a second pressing member), which is one pressing member of both of the pressing members constituting the driving device and is distantly moved to the other pressing member while being rotated, and the driving source. Moreover, among a plurality of gears constituting the deceleration device, by making the axial direction size of one gear of a pair of gears engaged with each other longer than that of the other gear, both of the gears are kept in the engaged state regardless of the axial direction displacement of the one pressing member (the second pressing member).

### Advantageous Effects of Invention

The drum brake type parking brake apparatus of the present invention constituted as mentioned above is operated as below to exhibit the braking force. Upon braking, the proximal end portions of the pair of expansion levers are strongly clamped from opposite sides by the driving device, both expansion levers are oscillated and displaced around the pivot portion between both expansion levers and both end portions of the joining link, whereby the gap between the distal end portions of both expansion levers is expanded. Since the oscillation centers of both expansion levers are biased to the respective distal end sides as the output sides, the gap between the distal end portions of both expansion levers is expanded by a large force. Moreover, the distal end portion of the first expansion lever displaces the web of one brake shoe directly or via another member in the outer direction of the diameter direction, and the distal end portion of the second expansion lever displaces the web of the other brake shoe via the strut in the outer direction of the diameter direction, respectively. Moreover, the linings of both brake shoes are pushed to the inner peripheral surface of the drum, thereby performing the braking.

Along with the braking, the reaction is applied to the distal end portions of both of the expansion levers in the direction in which they approach each other. The reaction is applied to the joining link as force of a compression direction and is offset in the joining link. Furthermore, force applied from the driving device to the proximal end portions of both expansion levers is also applied to the joining link as force of the compression direction and is offset in the joining link. Thus, a large force due to the braking is not applied to the portion such as the back plate supporting the driving device.

According to the drum brake type parking brake apparatus of the present invention that is constituted as mentioned above and is operated as described above, by adopting the link type of force increasing device with a low transmission loss, it is possible to promote a reduction in size and weight using the electric motor having a relatively small output. In addition, it is possible to realize a structure in which a large force is not applied to the joining portion of the expansion and contraction device and the back plate by offsetting the reaction due to the braking in the expansion and contraction device. For example, if the joining link and both expansion levers also have sufficient strength and rigidity, there is no need to make the strength and rigidity of the portion such as the back plate supporting the driving device large. As a result, it is easy to promote a reduction in the weight of the drum brake type parking brake apparatus.

Furthermore, similar to the fifth invention, when the lever ratios of the first and second expansion levers are identical to each other, even if the positional relationship between both expansion levers and a pair of pressing members constituting the driving device is changed, the braking force is maintained at nearly the original size.
That is, the pair of brake shoes following the inner peripheral surface of the drum is sometimes displaced with respect to the back plate by an eccentric movement or the like of the drum. When such a displacement occurs, the distal end portions of both expansion levers engaged with the webs of both brake shoes are displaced, and both expansion levers are oscillated around the pivot portion between the expansion levers and the joining link in the same direction. In the case of the fifth invention, since the lever ratios of both of the expansion levers are substantially equal to each other, before and after the oscillation change of both expansion levers, the gap between the proximal end portions of both expansion levers is not changed. For this reason, even when the gap between the pair of pressing members is left as it is, force by which the distal end portions of both expansion levers press the webs of both brake shoes is not changed, and the driving force is maintained at nearly the original size.
In addition, according to a sixth invention, in the state in which the driving source such as the electric motor is fixed, the oscillation displacements of the pair of pressing members can be stably performed, whereby the structure is simplified and a reduction in cost is promoted.

### Brief Description of Drawings

Fig. 1 is a cross-sectional view of major parts of a drum brake that shows a first example of an embodiment of the present invention.
Fig. 2 is a cross-sectional view taken from lines A-A of Fig. 1.
Fig. 3 is a diagram that extracts a pair of brake shoes and an expansion and contraction device and shows them from a rear surface side of Fig. 1.
Fig. 4 is a diagram that shows behaviors of each member in the state, in which the brake shoe is displaced, in the state of being viewed from the same direction as Fig. 1.
Fig. 5 is a partial cross-sectional view corresponding to a portion B of Fig. 1 that shows a preferable structure of an engagement portion of a proximal end portion of a second expansion lever and a first pressing member.
Fig. 6 is a perspective view that shows a second example of an embodiment of the present invention in the state in which a drum is omitted.
Fig. 7 is a front view that shows a second example of an embodiment of the present invention in the state in which a drum is omitted.
Fig. 8 is a cross-sectional view taken from lines C-C of Fig. 7.
Figs. 9A and 9B are diagrams corresponding to cross-sections D-D of Fig. 8 for explaining an effect of a structure in which a gap is clamped in an engagement portion of a distal end portion of an expansion lever and a pressing member. Fig. 9A is a diagram in which a slight gap is clamped. Fig. 9B is a diagram that shows the time when the gap can be oscillated and displaced by angle ±α.
Fig. 10 is a cross-sectional view of major parts of a drum brake that shows a third example of an embodiment of the present invention.
Fig. 11 is a cross-sectional view taken from lines E-E of Fig. 10 that shows the state in which a part is omitted.
Fig. 12 is a front view similar to Fig. 7 that shows another structure in which a gap is clamped in an engagement portion of a distal end portion of an expansion lever and an end portion of a strut.
Fig. 13 is a cross-sectional view taken from lines F-F of Fig. 12 that shows a braking state with an assembled drum.
Fig. 14 is a cross-sectional view taken from lines G-G of Fig. 12 that shows a braking state with an assembled drum.
Fig. 15 is a front view that shows a first example of a structure of the related art.
Fig. 16 is a cross-sectional view taken from lines H-H of Fig. 15.
Fig. 17 is a cross-sectional view taken from lines I-I of Fig, 15.
Fig. 18 is a schematic front view that shows a second example of a structure of the related art in the state in which a drum is omitted.
Fig. 19 is an enlarged cross-sectional view taken from lines J-J of Fig. 18.
Fig. 20 is a front view that shows a third example of a structure of the related art.

### Description of Embodiments

### [First Example of Embodiment]

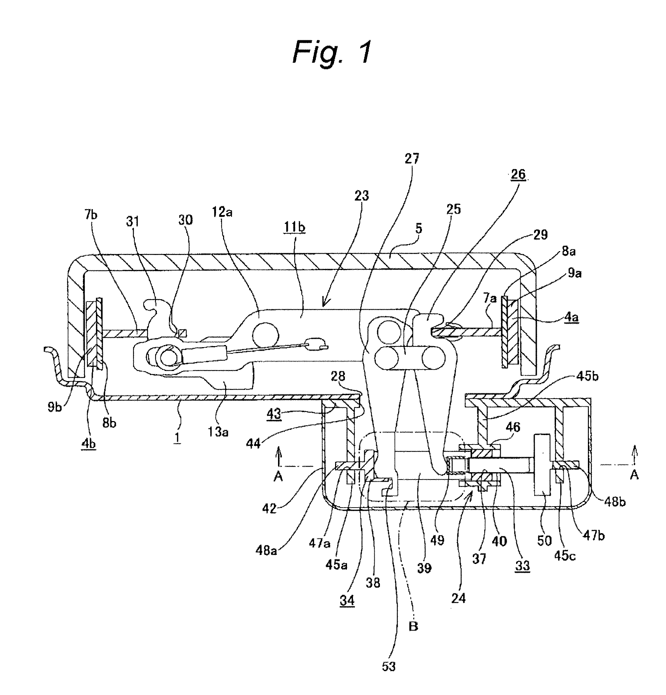

Figs. 1 to 5 show a first example of an embodiment of the present invention corresponding to first to third, fifth and sixth inventions. Furthermore, a characteristic of the present invention including the present embodiment is a structure of a parking brake apparatus for a drum brake. Since a structure and an operation of a drum brake main body portion other than the parking brake device is identical to a leading and trailing type of drum brake widely known from the related art including the structure of the related art shown in aforementioned Figs. 15 to 20, the illustrations and description relating to the identical portions will be omitted or simplified. Hereinafter, characteristic portions of the present invention will be preponderantly described.

An expansion and contraction device 23 for expanding and contracting a gap between a pair of brake shoes 4a and 4b is provided between inner peripheral edges of webs 7a and 7b constituting both of the brake shoes 4a and 4b, and the expansion and contraction device 23 is stretched (driven) by the driving device 24.
The expansion and contraction device 23 includes a joining link 25, a strut 11 b, and first and second expansion levers 26 and 27. In the case of the structure of the present embodiment, among these, the joining link 25 is disposed so as to be biased to the side of the web 7a of one brake shoe 4a of either of the brake shoes 4a and 4b in a direction (left and right direction in Figs. 1 to 4) of expanding and contracting both of the brake shoes 4a and 4b.
Furthermore, the first and second expansion levers 26 and 27 are disposed within a through hole 28 formed in a part of a circumferential direction of the back plate 1 so as to be separated in a direction of expanding and contracting both of the brake shoes 4a and 4b. In the case of the structure of the present embodiment, the through hole 28 is long in the expansion and contraction direction, an end portion (a right end portion of Fig. 1) thereof in a longitudinal direction exists in a portion facing a diameter middle portion of the web 7a of the one brake shoe 4a, and the other end portion thereof in the longitudinal direction is extended to a portion near the center of both of the brake shoes 4a and 4b.

The joining link 25 is provided (so as to be parallel to the through hole 28) in a portion along the through hole 28 at a surface side (a side surface with both brake shoes 4a and 4b installed thereon) of the back plate 1. Moreover, in the state in which the respective middle portions are disposed within the through hole 28, both of the expansion levers 26 and 27 pivotally support the portion near the respective middle portion distal end to both end portions of the joining link 25 in an oscillatable and displaceable manner. The distal end portion of the first expansion lever 26 of both of the expansion levers 26 and 27 is engaged with the web 7a of the one brake shoe 4a so that it can press the web 7a in the outer direction of the diameter direction. For this reason, at the distal end portion of the first expansion lever 26, in a portion facing the inner peripheral edge of the web 7a, a notch 29 to be engaged with the web 7a is formed.

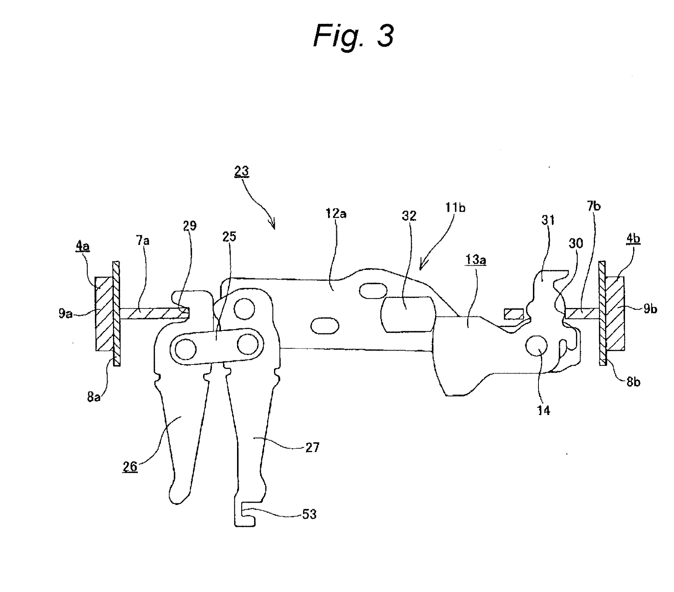

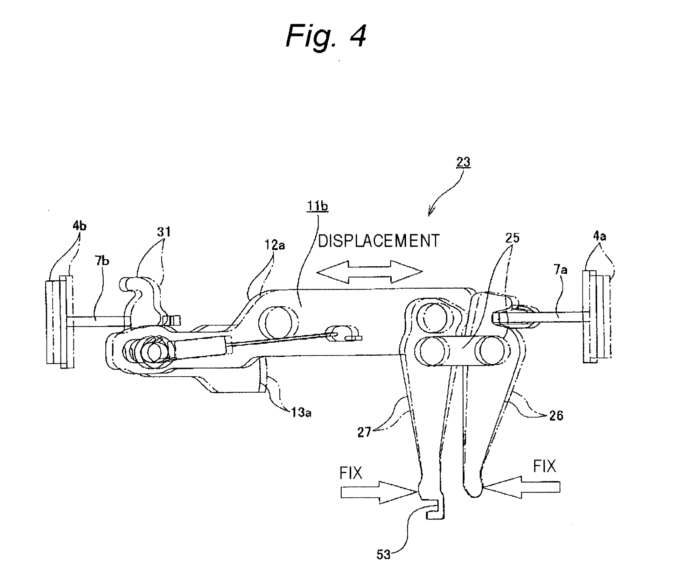

In contrast to this, the distal end portion of the second expansion lever 27 is pivotally supported on the proximal end portion (right end portions of Figs. 1 and 4 and a left end portion of Fig. 3) of the strut 11 b. Moreover, the distal end portion (left end portions of Figs. 1 and 4 and a right end portion of Fig. 3) of the strut 11 b is engaged with the web 7b of the other brake shoe 4b of both of the brake shoes 4a and 4b so that it can press the web 7b in the outer direction of the diameter direction (left direction of Figs. 1 and 4 and the right direction of Fig, 3). For this reason, in the case of the present embodiment, in a part of the web 7b, an engagement hole 30 is formed which is long in the longitudinal direction (the left and right direction of Figs. 1, 3 and 4) of the strut 11 b, and a hook bent portion 31 formed in the distal end portion of the strut 11b is engaged with the engagement hole 30. In regard to the longitudinal direction of the strut 11b, the size of the engagement hole 30 is slightly greater than the size of the portion existing inside the engagement hole 30 of the hook bet portion 31 (by a value corresponding to the optimal value of the gap which needs to exist between the inner peripheral surface of the drum 5 and the outer peripheral surfaces of both linings 9a and 9b during non-braking).

In the case of the present example, the strut 11b also has a function as an automatic gap adjustment device for adjusting the gap between the respective peripheral surfaces to the optimal value. In order to have the function, in the case of the present example, the strut 11 b is constituted by a main plate portion 12a and a sub plate portion 13a. Moreover, an end edge of a convex portion 32 protruded to a side surface of the main plate portion 12a is engaged with a proximal end edge of the sub plate portion 13a. When the brake shoe 4b is displaced to the right direction of Fig. 3 along with the operation of a service brake, based on the engagement of the hook bent portion 31 and the engagement hole 30, the sub plate portion 13a is rotated around a pivot shaft 14 in a clockwise direction of Fig. 3. As a consequence, the strut 11b is stretched. The brake shoe 4b returns to the right direction of Fig. 3 along with the release of the service brake, but the return amount is restricted by the mutual contact of the distal end portions of both expansion levers 26 and 27. Accordingly, as compared to an amount by which the brake shoe 4b is displaced in the outer direction of the diameter direction when the service brake is operated, an amount, by which the brake shoe 4b is displaced in the inner direction of the diameter direction when the service brake is released, corresponds to abrasion amounts of both linings 9a and 9b, and is reduced by an elongation of the strut 11 b, thereby compensating the abrasion values of the linings 9a and 9b of both brake shoes 4a and 4b. Moreover, in this manner, basically, the configuration and the operation of the automatic gap adjustment device are nearly the same as those of the structure of the related art described in aforementioned Figs. 15 and 16 and are not characteristic portions of the present invention, and thus the detailed description thereof will be omitted.

The expansion and contraction device 23 constituted by the aforementioned strut 11 b, the aforementioned joining link 25, and the first and second expansion levers 26 and 27 expands the gap between the distal end portions of both expansion levers 26 and 27 by a large force by contracting the gap between the proximal end portions of both expansion levers 26 and 27 by the driving device 24, and in the webs 7a and 7b of both brake shoes 4a and 4b, the gap between the portions near the end portions opposite to the anchor 2 (for example, see Figs. 15) is expanded. For this reason, the lever ratios of both expansion levers 26 and 27 are increased, and force input between the proximal end portions (lower end portions of Figs. 1, 3 and 4) of both expansion levers 26 and 27 is taken from between the distal end portions of both expansion levers 26 and 27 in the increased state. That is, the distance from the center of the pivot portion between an end portion of the joining link 25 and the portion near the middle portion distal end of the first expansion lever 26 to the engagement portion of the distal end portion of the first expansion lever 26 and the inner peripheral edge of the web 7a of the one brake shoe 4a is sufficiently smaller than the distance to an engagement portion (a contact portion) of the first expansion lever 26 and a second pressing member 33 described later constituting the driving device 24, whereby the lever ratio of the first expansion lever 26 is made sufficiently large (larger than 1, for example, about 3 to 5). Similarly, the distance from the center of the pivot portion between the other end portion of the joining link 25 and the portion near the middle portion distal end of the second expansion lever 27 to the center of the pivot portion between the distal end portion of the second expansion lever 27 and the proximal end portion of the strut 11 b is sufficiently smaller than the distance to an engagement portion of the second expansion lever 27 and a first pressing member 34 described later, whereby the lever ratio of the second expansion lever 27 is made sufficiently large. In the case of the present example, the lever ratio of the second expansion lever 27 and the lever ratio of the first expansion lever 26 are substantially equal to each other.

Moreover, in the case of the present example, the proximal end portions of the first and second expansion levers 26 and 27 are protruded from the rear surface (a lower surface of Fig. 1), which is a surface of an opposite side of the side with both brake shoes 4a and 4b installed thereon of both side surfaces of the back plate 1, through a rectangular through hole 28 which is formed in the back plate 1 and is long in a longitudinal direction of the strut 11 b. Moreover, in the rear surface portion of the back plate 1, the proximal end portions of both expansion levers 26 and 27 protruded from the rear surface are clamped from both sides in the longitudinal direction of the strut 11 b, thereby providing the driving device 24.

The driving device 24 includes first and second pressing members 34 and 33, and an electric motor 35 and a decelerator 36 as driving sources.
Among these, the first and second pressing members 34 and 33 are distantly moved in the disposition direction of the joining link 25 in the state of mutually interposing the proximal end portions of the first and second expansion levers 26 and 27 from the opposite sides. In the case of the present example, the first pressing member 34 is configured in a long rectangular shape which is formed by connecting both width direction end portions of a female screw portion 37 provided in one end portion thereof and both width direction end portions of a pressing portion 38 provided in the other end portion thereof by a pair of connection portions 39 and 39 disposed at intervals in the width direction. In contrast to this, the second pressing member 33 is formed as a screw lever shape in which an outer peripheral surface thereof is a male screw portion 40 screwed into the female screw portion 37. Moreover, in the state of screwing the female screw portion 37 with the male screw portion 40, the proximal end portions of the first and second expansion levers 26 and 27 are mutually clamped from the opposite sides by the inner side surfaces of the pressing portion 38 provided in the front end surface of the second pressing member 33 and the other end portion of the first pressing member 34.

In this manner, the driving device 24 is installed within a cover 42 in a portion covering the through hole 28 on the rear surface of the back plate 1 so as to expand and contract the gap between the first and second pressing members 34 and 33. Furthermore, the cover 42 is fixed to a substrate 43 in the state of covering the substrate 43, and a through hole 44 having the same shape and size as the through hole 28 is provided in the substrate 43. Moreover, the substrate 43 is joined and fixed to the rear surface of the back plate 11 in the state in which both of the through holes 28 and 44 are mated with each other. The driving device 24 is formed by attaching both pressing members 34 and 33, the electric motor 35, and the decelerator 36 to the substrate 43 and covering the periphery thereof by the cover 42.

In order to attach the respective members 34, 33, 35 and 36 to the substrate 43, three support plate portions 45a, 45b and 45c are provided in the substrate 43 so as to be parallel to each other and separated in the longitudinal direction of the strut 11 b. Among the respective support plate portions 45a, 45b, and 45c, on a support barrel portion 46 provided in the distal end portion of the central support plate portion 45b, the periphery portion of the female screw portion 37 is supported by one end portion of the first pressing member 34 so that it can be displaced in the axial direction. In contrast to this, support holes 47a and 47b are provided on the support plate portions 45a and 45c of both ends concentrically with the support barrel portion 46. Moreover, in the central portion of the front end surface (the other surface) of the first pressing member 34 and the proximal end surface central portion of the second pressing portion 33, support lever portions 48a and 48b are provided, respectively.

In the state in which the female screw portion 37 and the male screw portion 40 are screwed into each other and joined to each other, the first and second pressing members 34 and 33 fit the one end portion of the first pressing member 34 into the support barrel portion 46 and fit both support lever portions 48a and 48b into both support holes 47a and 47b so as to be displaceable in the axial direction (the longitudinal direction of the strut 11 b), respectively. Moreover, the support lever portion 48b of the proximal end surface central portion of second pressing member 33 is rotatably fitted into the support hole 47b. The first and second pressing members 34 and 33 are attached to the substrate 43 by this configuration. In this state, both pressing members 34 and 33 constitute a transport screw mechanism that converts the rotation movement of the second pressing member 33 into the linear movement by which both pressing members 34 and 33 are relatively displaced in the axial direction. Furthermore, among these, the front end surface of the second pressing member 33 is covered with a thrust sliding bearing 49 made of a slidable material such as an oiled metal, and synthetic resins.

Moreover, a large deceleration gear 50 is fixedly installed in a portion between the male screw portion 40 and the support lever portion 48b in the portion near the proximal end of the second pressing member 33. Additionally, the large deceleration gear 50 is engaged with a small deceleration gear 51 that is disposed so as to be parallel to the second pressing member 33. Furthermore, a deceleration gear row is provided between the small deceleration gear 51 and the electric motor 35, and the small deceleration gear 51 is freely rotated and driven in a desired direction at high torque. In addition, the axial direction size of the small deceleration gear 51 is sufficiently larger than the axial direction size of the large deceleration gear 50, which makes it possible to displace the second pressing member 33 with the large deceleration gear 50 fixedly installed thereon in the axial direction, and both gears 50 and 51 are kept in the engaged state regardless of the axial direction displacement.

As mentioned above, between the inner surface of the pressing portion 38 of the first pressing member 34 and the front end surface of the second pressing member 33 attached to the substrate 43, the proximal end portions of the first and second expansion levers 26 and 27 are disposed. In this state, the rotation of the first pressing member 34 is restricted by the engagement of the proximal end portions of both expansion levers 26 and 27 and a pair of connection portions 39 and 39 constituting the first pressing member 34. Moreover, by rotating the second pressing member 33 via the decelerator 36 by the electric motor 35, based on the screw connection between the female screw portion 37 and the male screw portion 40, the gap between the inner surface of the pressing portion 38 of the first pressing member 34 and the front end surface of the second pressing member 33 is expanded or contacted.

The drum brake parking brake apparatus of the present example configured as above is operated as below and exhibits the braking force. At the time of the braking, the second pressing member 33 is rotated by the electric motor 35, thereby contracting the gap between the inner surface of the pressing portion 38 of the first pressing member 34 and the front end surface of the second pressing member 33. Moreover, between both surfaces, the proximal end portions of both expansion levers 26 and 27 are strongly clamped from the opposite sides, and both expansion levers 26 and 27 are oscillated and displaced around the pivot portion of both expansion levers 26 and 27 and both end portions of the joining link 25, thereby expanding the gap between the distal end portions of both expansion levers 26 and 27. The oscillation centers of both expansion levers 26 and 27 are biased to the respective distal end sides as output sides (the respective lever ratios are large), and thus the gap between the distal end portions of both expansion levers 26 and 27 is expanded by a large force. Moreover, in the case of the present example, among them, the distal end portion of the first expansion lever 26 directly displaces the web 7a of one brake shoe 4a in the outer direction of the diameter direction, and the distal end portion of the second expansion lever 27 displaces the web 7b of the other brake shoe 4b via the strut 11 b in the outer direction of the diameter direction. Moreover, the linings 9a and 9b of both brake shoes 4a and 4b are pushed to the inner peripheral surface of the drum 5 to perform the braking. The force increasing mechanism by both expansion levers 26 and 27 has a low frictional loss and has excellent transmission efficiency. Although it is inevitable that the gear type of decelerator 36 generates a certain degree of frictional loss, the force increase ratio in the decelerator 36 portion is suppressed to a minimum by an increase in force by both expansion lever 26 and 27 portions, and the frictional loss in the decelerator 36 portions is also suppressed to a minimum accordingly. For this reason, it is possible to promote a reduction in size and weight using an electric motor having a relatively small output. Furthermore, it is also possible to clamp another member capable of transmitting the pressing force between the distal end portion of the first expansion lever 26 and the web 7a of the one brake shoe 4a.

Together with the braking to be performed as mentioned above, the reaction of a direction of approaching each other is applied to the distal end portions of both expansion levers 26 and 27. The reaction is applied to the joining link 25 as force in the compression direction and is applied to both pressing members 34 and 33 as force in the opposite direction (direction of mutually pressing and expanding both pressing members 34 and 33). Moreover, the reaction is eliminated (offset) in the engagement portion of both members 34 and 33. Thus, a large force due to the braking is not applied to the portion that supports the respective constituent members of the braking device 24 such as the back plate 1 or the substrate 43. For this reason, if the joining link 25, the first and second pressing members 34 and 33 and the engagement portion thereof, and both expansion levers 26 and 27 have sufficient rigidity and strength, it is easy to promote a reduction in weight of the drum brake type parking brake apparatus without the need to specifically increase the rigidity and strength of the portion that supports the driving device 24 such as the back plate 1 or the substrate 43.

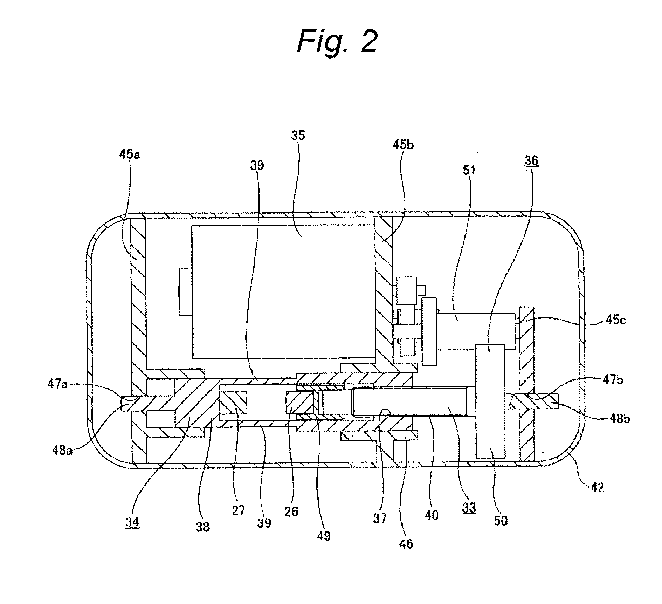

Additionally, in the case of the present example, since the lever ratios of the first and second expansion levers 26 and 27 are equal to each other, even when the positional relationship between both expansion levers 26 and 27 and the first and second pressing members 34 and 33 constituting the driving device 24 is changed, the braking force is maintained at nearly the original size. This will be described with reference to Fig. 4.
There is a case where force in the rotational direction is applied to the drum 5 after operating the parking brake such as a case of parking a vehicle on a sloping road. In this case, there is a case where the inner peripheral surface of the drum 5 is slightly eccentrically moved. As a consequence of the eccentric movement, both of the brake shoes 4a and 4b, in which the outer peripheral surfaces of the respective linings 9a and 9b are pushed to the inner peripheral surface of the drum 5, are displaced to the surface direction of the back plate 1. As a consequence of the displacement, both of the expansion levers 26 and 27, the respective distal end portions of which are engaged with the inner peripheral edge surfaces of the webs 7a and 7b of both brake shoes 4a and 4b directly or via the strut 11 b, are displaced from the solid line state of Fig. 4 to the broken line state. That is, both of the expansion levers 26 and 27, the respective distal end portions of which are engaged with both webs 7a and 7b, are oscillated in the same direction around the pivot portion of the expansion levers 26 and 27 and both end portions of the joining link 25, respectively. In the case of the present structure, since the lever ratios of both of the expansion levers 26 and 27 are substantially equal to each other, before and after the oscillation displacement of both expansion levers 26 and 27, the gap between the proximal end portions (lower end portions of Fig. 4) of both expansion levers 27 and 27 is not changed. For this reason, even when the gap between both pressing members 34 and 33 (see Figs. 1 and 2) is left as it is, the gap between the distal end portions (upper end portions of Fig. 4) of both expansion levers 26 and 27 is also hardly changed, the force by which both expansion levers 26 and 27 press the webs 7a and 7b of both brake shoes 4a and 4b is not changed, and the braking force is maintained at nearly the original size.

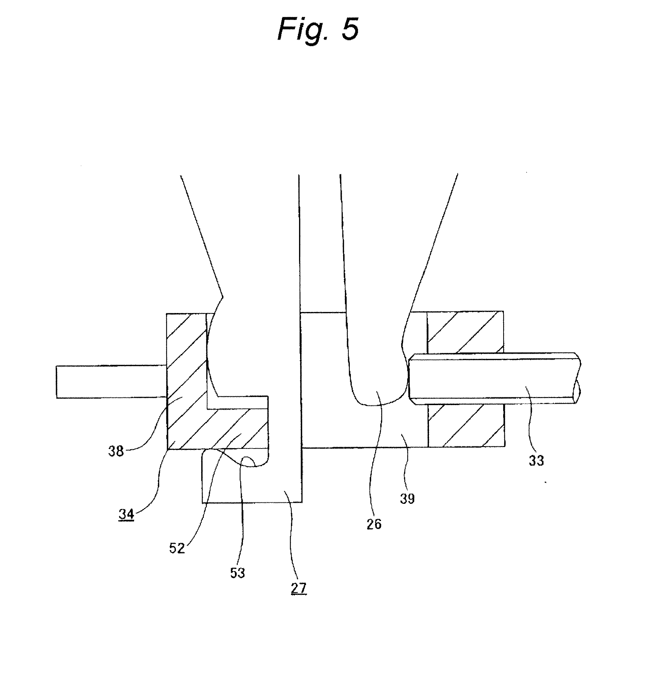

Additionally, in the case of carrying out the structure of the present example, as shown in Figs. 1 and 5, it is desirable that the proximal end portion of the second expansion lever 27 and the pressing portion 38 of the first pressing member 34 are combined with each other in the state of engaging a hook protrusion piece 52 and a hook notch 53. The reason is that, because force in the direction of being separated from the driving device 24 is applied to the proximal end portion of the strut 11 b when the parking brake is operated, the proximal end portion of the second expansion lever 27 is prevented from escaping from the inside of the first pressing member 34 regardless of the force.
Furthermore, unlike the structure of the present structure, it is also possible to dispose the joining link 25 in the central portions of both brake shoes 4a and 4b and provide the strut between the distal end portions of the first and second expansion levers 26 and 27 and both of the webs 7a and 7b, respectively.

### [Second Example of Embodiment]

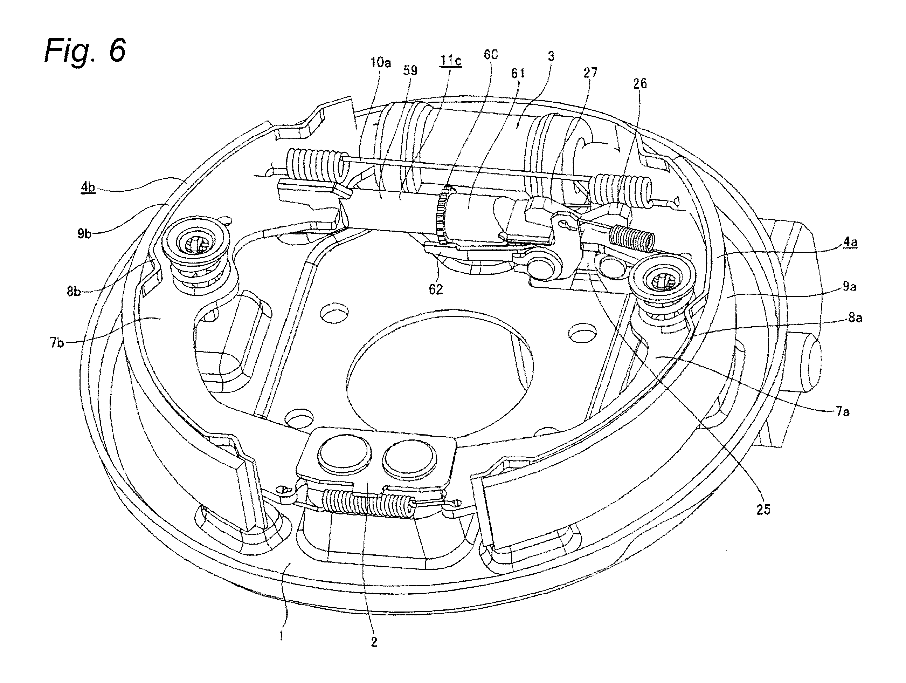

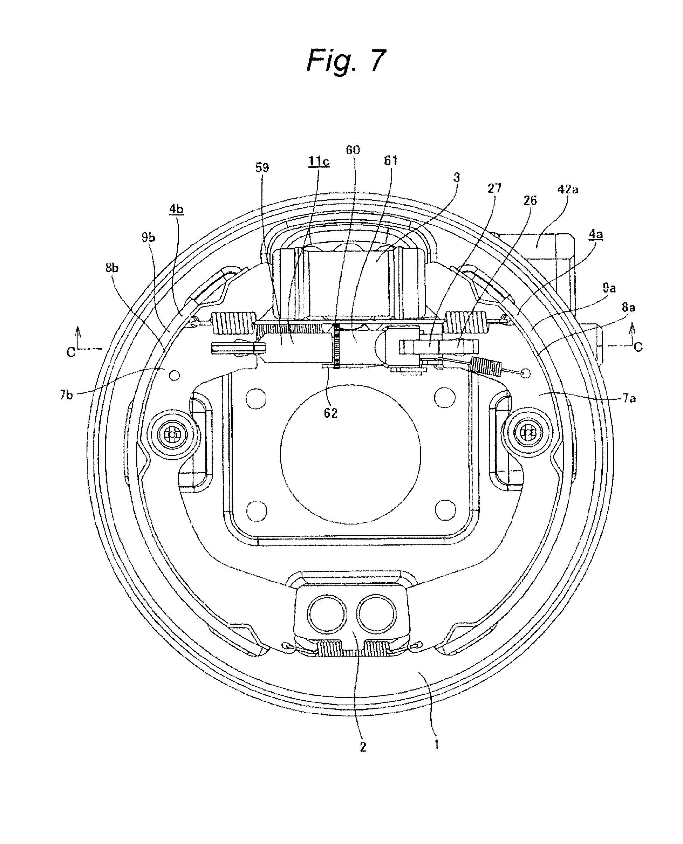

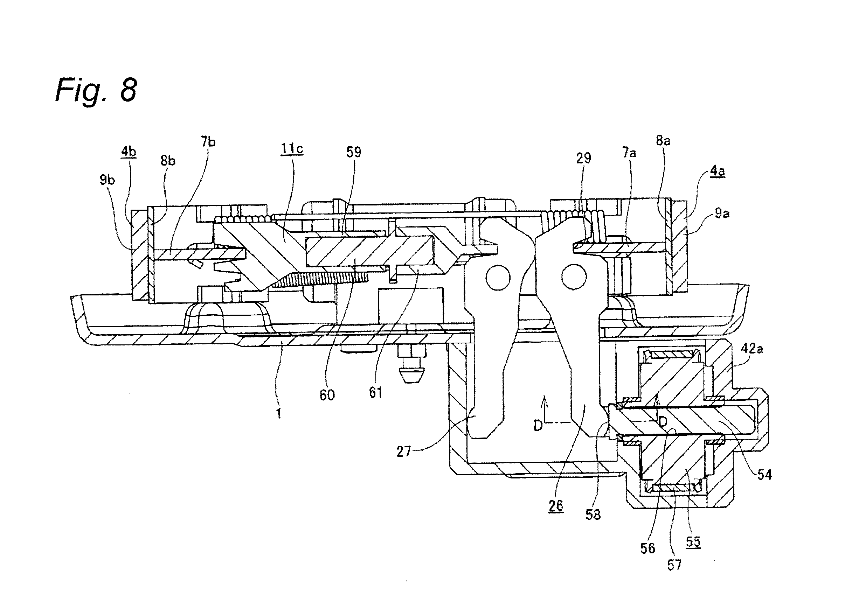

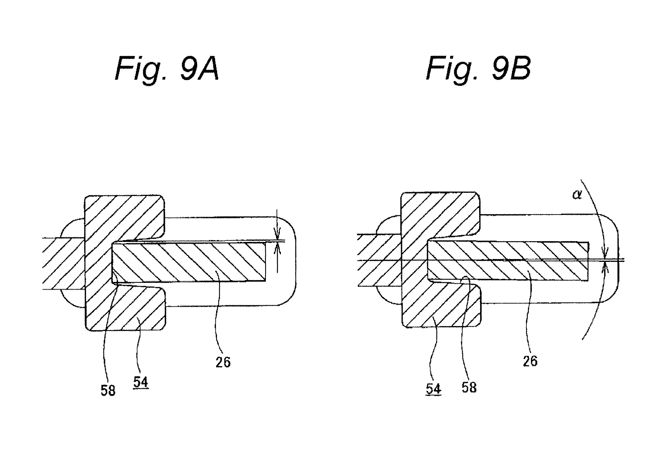

Figs. 6 to 9 show a second example of an embodiment of the present invention corresponding to the first, fourth and fifth inventions. In the case of the present example, the first and second pressing members, which mutually clamp and press the proximal end portions of the first and second expansion levers 26 and 27 from the opposite sides, are a cover 42a fixed to the back plate 1, and a screw lever 54 supported in the cover 42a so as to be oscillatable only in the axial direction. Furthermore, the screw lever 54 is screwed into a screw hole 56 provided in a central portion of a deceleration rotation member 55 such as a large deceleration gear and a large deceleration pulley rotatably supported in the cover 42a. Furthermore, the deceleration rotation member 55 is freely rotated and driven via a belt 57 or a gear row by means of the electric motor constituting a driving source. Moreover, the proximal end portions of the first and second expansion levers 26 and 27 are mutually supported from the opposite sides by means of a part of an inner surface of the cover 42a and the distal end portion of the screw lever 54. The rotation of the screw lever 54 is restricted based on the engagement of an engagement groove 58 formed in the distal end portion thereof and the proximal end portion of the first expansion lever 26. Furthermore, between the inner surface of the engagement groove 58 and the proximal end portion of the first expansion lever 26, as shown in Fig. 9A, the first expansion lever 26 and the screw lever 54 can be oscillated and displaced by an angle ±α as shown in Fig. 9B. The reason is that, even when the first expansion lever 26 is displaced with respect to the screw lever 54 in the surface direction (up and down direction of Fig. 7, and both sides direction of Fig. 8) of the back plate 1 due to partial abrasions of the linings 9a and 9b of the pair of brake shoes 4a and 4b, the displacement can be absorbed (compensated).

In both of the expansion levers 26 and 27, similarly to the case of the first example of the aforementioned embodiment, the distal end portion of the first expansion lever 26 is directly abutted against the web 7a of one brake shoe 4a. In contrast to this, the distal end portion of the second expansion lever 27 is abutted against the web 7b of the other brake shoe 4b via the strut 11c. The strut 11c is formed by combining a screw barrel 59, a screw lever 60, and a support barrel 61 as is well-known from PTL 7 and the like. When both of the linings 9a and 9b are worn out, the screw lever 60 is rotated by the lever 62 to stretch the strut 11c. Since the structure and the operation of such an automatic gap adjustment device is well-known from the related art as described in PTL 7 mentioned above or the like, detailed description thereof will be omitted.
Similarly to the case of the first example of the aforementioned embodiment, it is easy to promote a reduction in weight of the drum brake type parking brake apparatus even by means of the structure of the present example as mentioned above.

### [Third Example of Embodiment]

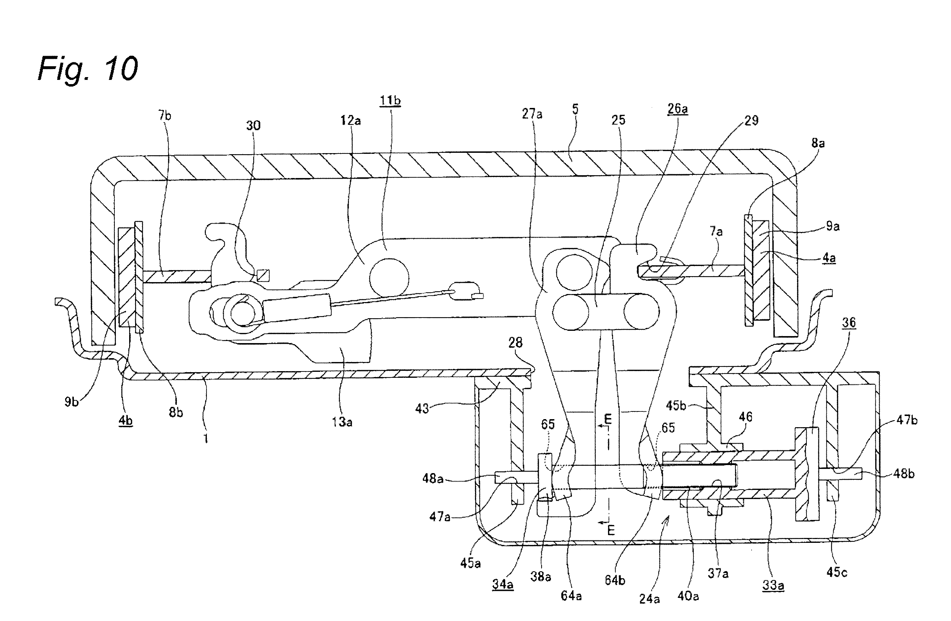

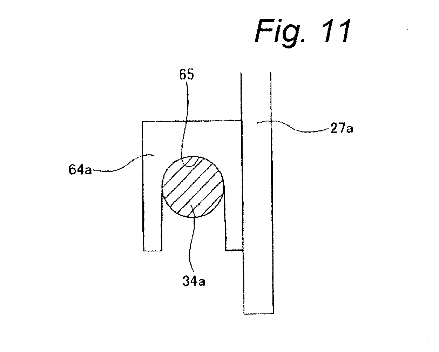

Figs. 10 and 11 show a third example of an embodiment of the present invention corresponding to the first to third, fifth and sixth inventions. In the case of the present example, in contrast to the case of the first example of the aforementioned embodiment, the female screw portion 37a is provided on the side of the second pressing member 33a, the male screw portion 40a is provided on the side of the first pressing member 34a, respectively, and both of the screw portions 37a and 40a are screwed into each other. Moreover, in order to mutually clamp the proximal end portions of the first and second expansion levers 26a and 27a from opposite sides and enable the proximal end portions to be pressed by both of the pressing member 33a and 34a, pressing target plate portions 64a and 64b are provided in the side edge portions of the portions near the proximal ends of both expansion levers 26a and 27a, respectively. Both of the pressing target plate portions 64a and 64b are formed by bending the metallic plate constituting both of the expansion levers 26a and 27a to the front side of Fig. 10 and the right side of Fig. 11, and each of them is formed with a U-shaped notch 65 that is opened to the proximal end edge sides. Moreover, in the state in which the first pressing member 34a is inserted through both of the notches 65 and 65, both of the pressing target plate portions 64a and 64b are clamped by an outward flange-shaped pressing portion 38a provided in the first pressing member 34a and the front end surface of the second pressing member 33a, and can be pressed at the time of the braking. The configuration and the operation of other portions are the same as the first example of the aforementioned embodiment, and thus overlapping description thereof will be omitted.

Although the present invention has been described in detail and with reference to the specific embodiments, it will be evident to those skilled in the art that various alterations or modifications can be added thereto without departing from the spirit or the scope of the present invention.

The present application contains subject matter related to that disclosed in Japanese Priority Patent Application JP 2009-252657 filed on November 4, 2009, the entire contents of which are hereby incorporated by reference.

### Industrial Applicability

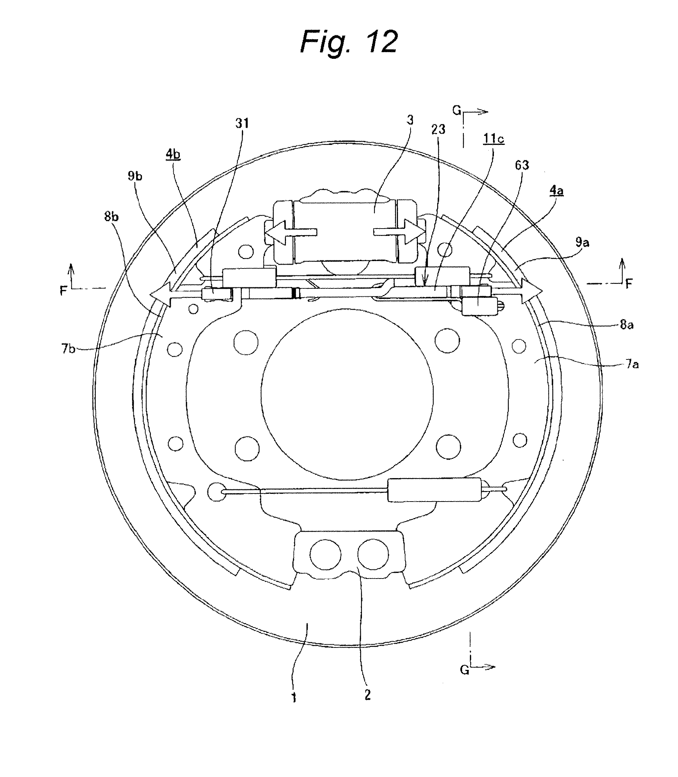

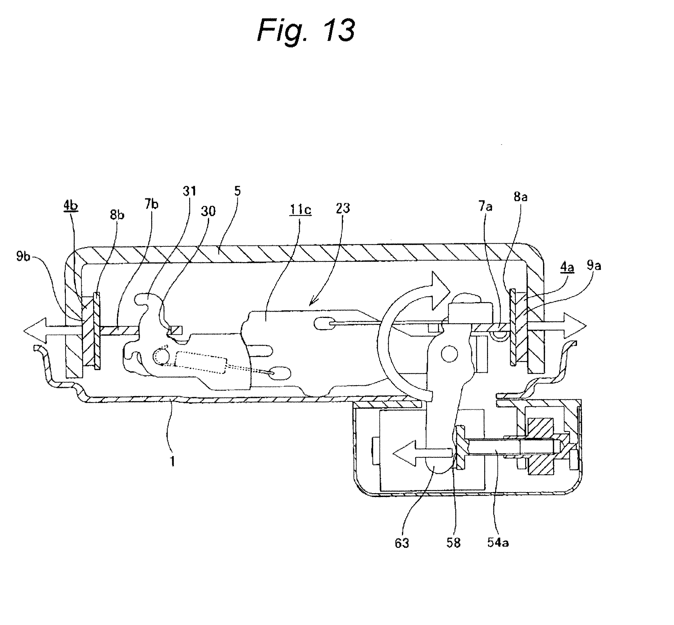

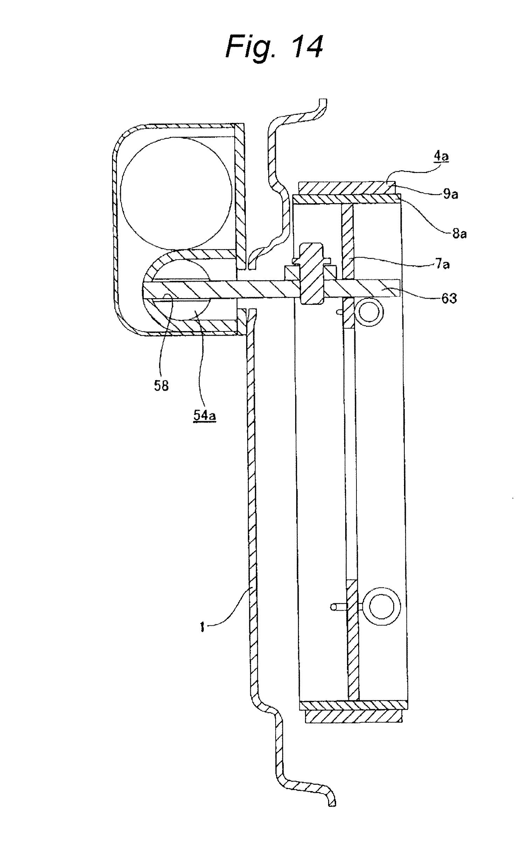

The structure shown in Figs. 9A and 9B can be carried out by a structure different from the present invention. For example, as shown in Figs. 12 to 14, the present invention can be applied to a structure in which the gap between the pair of brake shoes 4a and 4b is expanded by a single driving lever 63. That is, by forming a gap in an engagement portion between the proximal end portion (a lower end portion of Fig. 13, and a left end portion of Fig. 14) of the driving lever 63 and the engagement groove 58 formed in the distal end portion of the screw lever 54a, when the linings 9a and 9b of both of the brake shoes 4a and 4b are worn out, the displacement of the driving lever 63 and the screw lever 54a can be compensated.

### Reference Signs List

- 1: back plate
- 2: anchor
- 3: wheel cylinder
- 4a,: 4b brake shoe
- 5: drum
- 6: cylinder housing
- 7a, 7b: web
- 8a, 8b: back plate
- 9a, 9b: lining
- 10a, 10b: return spring
- 11, 11b, 11c: strut
- 12, 12a: main plate portion
- 13, 13a: sub plate portion
- 14: pivot shaft
- 15: long hole
- 16: parking lever
- 17: pressing rod
- 18: tension rod
- 19: electric motor
- 20: decelerator
- 21, 21a: transport screw device
- 22: actuator
- 23: expansion and contraction device
- 24, 24a: driving device
- 25: joining link
- 26, 26a: first expansion lever
- 27, 27a: second expansion lever
- 28: through hole
- 29: notch
- 30: engagement hole
- 31: hook bent portion
- 32: convex portion
- 33, 33a: second pressing member
- 34, 34a: first pressing member
- 35: electric motor
- 36: decelerator
- 37, 37a: female screw portion
- 38, 38a: pressing portion
- 39: connection portion
- 40, 40a: male screw portion
- 42, 42a: cover
- 43: substrate
- 44: through hole
- 45a, 45b, 45c: support plate portion
- 46: support barrel portion
- 47a, 47b: support hole
- 48a, 48b: support lever portion
- 49: thrust sliding bearing
- 50: large deceleration gear
- 51: small deceleration gear
- 52: hook protrusion piece
- 53: hook notch
- 54, 54a: screw lever
- 55: deceleration rotation member
- 56: screw hole
- 57: belt
- 58: engagement groove
- 59: screw barrel
- 60: screw lever
- 61: support barrel
- 62: lever
- 63: driving lever
- 64a, 64b: pressing target plate portion
- 65: notch

## Claims

1. A drum brake type parking brake apparatus comprising: a back plate that is supported and fixed to a constitution member of a suspension device; a pair of brake shoes that is fixed in two positions of opposite sides in a diameter direction of the back plate so as to be displaceable in the diameter direction of the back plate; a drum that is provided in a state of covering both of the brake shoes and is rotated with vehicle wheels; an expansion and contraction device that is provided between inner peripheral edges of webs constituting both of the brake shoes so as to expand or contract a gap between both of the brake shoes; and a driving device for driving the expansion and contraction device,
wherein the expansion and contraction device includes a joining link, a strut, and first and second expansion levers, the joining link is disposed in a direction of expanding or contracting both of the brake shoes, the first expansion lever is pivotally supported on an end portion of a side of one brake shoe of the joining link at a portion near a middle portion distal end thereof, the distal end portion is engaged with the web of one brake shoe so that the distal end portion presses the web in an outer direction of the diameter direction, the second expansion lever is pivotally supported on an end portion of a side opposite to the one brake shoe of the joining link at a portion near a middle portion distal end thereof, the distal end portion is pivotally supported on the proximal end portion of the strut, and the distal end portion of the strut is engaged with the web of the other brake shoe of both of the brake shoes so that the distal end portion presses the web in the outer direction of the diameter direction,
wherein the driving device includes a pair of pressing members that is distantly moved in a disposition direction of the joining link in a state of mutually interposing the proximal end portions of the first and second expansion levers from opposite sides, and a driving source for expanding or contracting the gap between both of pressing members, and
wherein a distance from a center of a pivot portion between the end portion of the joining link and a portion near the middle portion distal end of the first expansion lever to an engagement portion of the distal end portion of the first expansion lever with the inner peripheral edge of the web of the one brake shoe is smaller than a distance to an engagement portion of the first expansion lever with the pressing member, and a distance from a center of a pivot portion between the end portion of the joining link and a portion near the middle portion distal end of the second expansion lever to a center of the pivot portion between the distal end portion of the second expansion lever and the proximal end portion of the strut is smaller than a distance to an engagement portion of the second expansion lever with the pressing member.

2. The drum brake type parking brake apparatus according to Claim 1,
wherein both of the pressing members are a first pressing member that has one screw portion among a female screw portion and a male screw portion at one end portion thereof, and a second pressing member that has the other screw member among the female screw portion and the male screw portion which is screwed to the one screw portion, and in a state in which the one screw portion is screwed to the other screw portion, the distal end surface of the second pressing member and the other end portion of the first pressing member mutually clamp the proximal end portions of the first and second expansion levers from the opposite sides therebetween.

3. The drum brake type parking brake apparatus according to Claim 2,
wherein the proximal end portions of the first and second expansion levers are protruded from a rear surface, which is a surface of a side opposite to the side equipped with both of the brake shoes of both side surfaces of the back plate, through a through hole formed in the back plate,
wherein the driving device, which relatively rotates the first pressing member and the second pressing member using an electric motor as a driving source, is installed in a portion that covers the through hole on the rear surface of the back plate, and
wherein, among the first and second pressing members, the first pressing member is supported in a state of allowing the displacement of the disposition direction of the joining link and the strut but not being rotated, the second pressing member is supported so as to be displaceable and rotatable in this direction, and the electric motor can rotate and drive the second pressing member in both directions.

4. The drum brake type parking brake apparatus according to Claim 1,
wherein both of the pressing members are a cover that is fixed to the back plate and a screw lever that is supported within the cover so as to be only movable in an axial direction, the screw lever is screwed into a screw hole which is provided in a center portion of a deceleration rotation member that is only rotatably supported within the cover and is rotated by the driving device, and a part of the cover and the distal end portion of the screw lever mutually clamp the proximal end portions of the first and second expansion levers from the opposite sides therebetween.

5. The drum brake type parking brake apparatus according to any one of Claims 1 to 4,
wherein when a ratio of the distance from the center of the pivot portion between the end portion of the joining link and the portion near the middle portion distal end of the first expansion lever to the engagement portion of the distal end portion of the first expansion lever with the inner peripheral edge of the web of the one brake shoe, to the distance from the first expansion lever to the engagement portion of the first expansion lever with the pressing member is a lever ratio relating to the first expansion lever, and
when a ratio of the distance from the center of the pivot portion between the end portion of the joining link and the portion near the middle portion distal end of the second expansion lever to the center of the pivot portion of the distal end portion of the second expansion lever and the proximal end portion of the strut, to the distance from the second expansion lever to the engagement portion of the second expansion lever with the pressing member is a lever ratio relating to the second expansion lever,
both of the lever ratios are substantially equal to each other.

6. The drum brake type parking brake apparatus according to any one of Claims 1 to 5,
wherein a gear type deceleration device is provided between a pressing member, which is one pressing member of both of the pressing members constituting the driving device and is distantly moved to the other pressing member while being rotated, and the driving source, and among a plurality of gears constituting the deceleration device, by making an axial direction size of one gear of a pair of gears engaged with each other longer than that of the other gear, both of the gears are kept in an engaged state regardless of the axial direction displacement of the one pressing member.
